# EUROPÄISCHE PATENTSCHRIFT

(11) **EP 1 431 117 B1**
(45) Veröffentlichungstag und Bekanntmachung des Hinweises auf die Patenterteilung: **11.01.2006**
(21) Anmeldenummer: 03025392.6
(22) Anmeldetag: 05.11.2003
(51) Int. Cl.: B60Q 1/04, F21V 17/00

(54) **Beleuchtungseinrichtung**
Lighting device
Dispositif d'éclairage

(30) Priorität: 16.12.2002 DE 10258628
(43) Veröffentlichungstag der Anmeldung: 23.06.2004
(73) Patentinhaber: DaimlerChrysler AG, 70567 Stuttgart (DE)
(72) Erfinder: Jocher, Reiner, 71134 Aidlingen (DE)

(56) Entgegenhaltungen:
- DE-A1- 2 727 517
- DE-A1- 3 030 427
- DE-A1- 19 950 592
- DE-C1- 3 728 752

## Beschreibung

Die Erfindung betrifft eine Beleuchtungseinrichtung für ein Kraftfahrzeug, mit einer Scheibe, gemäß dem Oberbegriff des Anspruchs 1.

Eine solche Beleuchtungseinrichtung ist aus DE 30 30 427 A1 bekannt.

Ein besonderer Gefahrenpunkt für Verletzungen von Fußgängern sind die im Bereich der äußeren Ecken eines Kraftfahrzeugs angeordneten Scheinwerfer. Bei einer Kollision zwischen einem Fußgänger und dem Kraftfahrzeug im Bereich der Scheinwerfer besteht die Gefahr, dass der Fußgänger durch die relativ harte Scheibe und/oder bei einem Zerspringen derselben durch Splitter verletzt wird.

Aus der DE 27 27 517 A1 ist ein Kraftwagen mit einem bei einem Unfall unter Energieabsorption einfahrbaren vorderen Stoßfänger bekannt, bei dem schutzbedürftige Bauteile, wie z.B. Scheinwerfer und/oder Kühlergrill und dergleichen an fahrzeugfesten Teilen schwenkbar derart gelagert sind, dass sie unter direkter oder indirekter Einwirkung des nach hinten fahrenden Stoßfängers nach hinten in eine ungefährdete Stellung verschwenkt werden. Durch die beschriebene Bauart der Anordnung von gefährdeten Bauteilen im Bereich des Stoßfängers erfolgt das Einfahren der Scheinwerfer in die geschützte Stellung derart, dass der vordere Stoßfänger gegen einen Puffer fährt und im weiteren Verlauf der Verschiebung die Scheinwerfereinheit nach hinten schwenkt.

Des weiteren ist vorgesehen, dass die schutzbedürftigen Bauteile durch Federkraft in ihrer Normalstellung gehalten und gegen die Federkraft verschwenkbar sind. Dies bewirkt, dass nach einem leichteren Unfall die Stoßfängeranordnung sowie die Scheinwerfereinheit von selbst wieder in ihre Normallage zurückkehren.

Aus der DE 37 28 752 Cl ist ein Frontscheinwerfer für Kraftfahrzeuge bekannt, welcher eine Streuscheibe aufweist, die zur Abdeckung einer Lichtaustrittsöffnung eines Reflektorgehäuses dient, und die an diesem durch einen Befestigungsrahmen gehalten wird, und die sich in Richtung der Reflektorgehäusetiefe nur am Reflektorgehäuse abstützt, das zumindest in einem Abstützbereich bei einem Aufprall nachgibt und den Weg für ein nachgebendes Eintauchen der Streuscheibe in einen Reflektorgehäusehohlraum freigibt, ohne dass der Befestigungsrahmen nachteilig verformt wird.

Die Streuscheibe ist über einen umlaufenden Lagerfuß in Fahrzeuglängsrichtung nach vorne an der Rückseite des Befestigungsrahmens und entlang ihrem Außenumfang ebenfalls an diesem angeklebt. In Richtung der Reflektorgehäusetiefe stützt sie sich mit dem Lagerfuß nur am Reflektorgehäuse ab, das aber zumindest in einem oberen, in Richtung der Fahrzeugquerachse verlaufenden Abstützbereich bei einem Aufprall bzw. einer größeren Krafteinwirkungen nachgibt, so dass die Streuscheibe in den Reflektorgehäusehohlraum gedrückt werden kann und damit keinen verletzungsfördernden Widerstand bietet.

Aus der DE 38 02 104 A1 ist eine Anordnung einer Beleuchtungseinheit für ein Kraftfahrzeug bekannt, welche ein an der Karosserie des Fahrzeugs nachgiebig abgestütztes Gehäuse zur Aufnahme wenigstens einer Lampe aufweist. Bei einer von außen einwirkenden Stoßbelastung kann das Gehäuse mit jedem Randbereich in einen karosserieseitigen Freiraum ausweichen. Anschließend wird das Gehäuse von einer Rückstellkraft in die Normallage zurück verlagert.

Die Beleuchtungseinheit kann bei einem Unfall auch größere Aufprallgeschwindigkeiten schadlos überstehen, wobei die Stoßbelastung aus allen möglichen Richtungen auf die Beleuchtungseinheit einwirken kann. Die Anordnung kann zudem so ausgebildet werden, dass sie einen Großteil der Stoßenergie während der Verlagerung der Beleuchtungseinheit in den Freiraum absorbiert. In diesem Fall wird bei einem Unfall beispielsweise die von einer Person auf die Beleuchtungseinheit ausgeübte Stoßbelastung herabgesetzt, wodurch sich die Verletzungsgefahr vermindert.

Es ist Aufgabe der vorliegenden Erfindung, eine Beleuchtungseinrichtung eines Kraftfahrzeugs so auszugestalten, dass das Verletzungsrisiko einer Person, die mit dem Kraftfahrzeug kollidiert, vermindert wird.

Diese Aufgabe wird durch den Gegenstand des unabhängigen Anspruchs gelöst, vorteilhafte Ausgestaltungen sind Gegenstand der Unteransprüche.

Die Erfindung beruht auf dem allgemeinen Gedanken, die Beleuchtungseinrichtung mit einer Scheibe, die unter einer in Fahrzeuglängsrichtung einwirkenden Kraft um eine quer und horizontal zur Fahrzeuglängsrichtung verlaufende Schwenkachse verschwenkbar ist, so auszugestalten, dass die Scheibe unter einer in im wesentlichen in Fahrzeuglängsrichtung einwirkenden Kraft nach hinten verschwenkt wird und so die Folgen eines Aufpralls für einen mit dem Fahrzeug kollidierenden Fußgänger abmildert. Dies wird durch eine Rahmenkonstruktion, bestehend aus einem ersten und einem zweiten Rahmen, erreicht, wobei die Scheibe am ersten Rahmen befestigt ist und dieser an dem zweiten Rahmen um die Schwenkachse verstellbar gelagert ist. Der zweite Rahmen ist dabei an einem fahrzeugfesten Gehäuseteil der Beleuchtungseinrichtung angeordnet.

Besonders vorteilhaft ist bei der beschriebenen Ausführungsform, dass im Crashfall lediglich der erste Rahmen samt integrierter Scheibe verstellt werden muss, was aufgrund des geringen Gewichts und der damit einhergehenden geringen Trägheit leicht möglich ist. Dadurch wird gewährleistet, dass auch geringere Anprallkräfte, wie sie z.B. von Kindern und/oder kleineren Personen ausgeübt werden, zu einem Verstellen bzw. zu einem Ausweichen der Scheibe und damit zu einer das Verletzungsrisiko senkenden Reaktion der Beleuchtungseinrichtung führen.

Des weiteren wird bei einem Aufprall eine im Gehäuse integrierte Leuchteinheit nicht verstellt. Dies bietet den Vorteil, dass im Gegensatz zu herkömmlichen Beleuchtungseinrichtungen, die bei einem geringen Anprall komplett neu justiert werden müssen, ein Nachjustieren in einer Fachwerkstatt entfällt und somit Kosten gespart werden können.

Eine vorteilhafte Weiterbildung der erfindungsgemäßen Lösung ist dadurch gekennzeichnet, dass der erste und der zweite Rahmen an zur Schwenkachse parallel und davon beanstandet gelegenen Rahmenseiten über zumindest ein sich in Schwenkrichtung erstreckendes Führungselement aneinander geführt sind. Dem Führungselement kommt dabei die Aufgabe zu, bei einem Verstellen des ersten Rahmens diesen passgenau dem zweiten Rahmen zu zuführen. Ein Verkanten und/oder Verwinden des ersten Rahmens kann somit vermieden werden, wodurch die Funktionalität der Erfindung gewährleistet wird.

Entsprechend einer besonders bevorzugten Ausführungsform kann vorgesehen sein, dass zwischen den beiden Rahmen zumindest ein Federelement angeordnet ist. Insbesondere kann vorgesehen sein, dass das Federelement zwischen den beiden zur Schwenkachse parallel und davon beabstandet gelegenen Rahmenseiten angeordnet ist.

Die Anordnung eines Federelements bietet den Vorteil, bei einem Aufprall in elastischer Weise nachzugeben und nach dem Aufprall den ersten Rahmen samt Scheibe selbstständig in die normale Ausgangslage zurück zu verfahren. Gemäß dem Hebelgesetz ist die Anordnung des Federelements zwischen den beiden zur Schwenkachse parallel und davon beabstandet gelegenen Rahmenseiten dabei am günstigsten.

Entsprechend einer weiteren Ausführungsform der erfindungsgemäßen Lösung kann vorgesehen sein, dass der erste und der zweite Rahmen zusätzlich oder anstatt der oben genannten Blattfedern über eine Schenkelfeder verbunden und bis zu einem öffnenden Endanschlag spannbar sind. Der Schenkelfeder kommt dabei die Aufgabe zu, die Blattfeder zu unterstützen oder bei alleinigem Einsatz die in Öffnungsrichtung spannende Lage des ersten und des zweiten Rahmens zu gewährleisten.

Eine besonders bevorzugte Ausführungsform kann dadurch gekennzeichnet sein, dass der erste und der zweite Rahmen jeweils aus U-Profilen ausgebildet sind, wobei die U-Profile am jeweiligen Rahmen so angeordnet sind, dass eine offene Seite des U-Profils am ersten Rahmen der offenen Seite des U-Profils am zweiten Rahmen gegenüber liegt. Zweckmäßigerweise korrespondiert dabei ein Außenmaß des zweiten Rahmens mit einem Innenmaß des ersten Rahmens derart, dass in zusammengeklapptem Zustand der erste Rahmen den zweiten Rahmen aufnimmt.

U-Profile besitzen ein großes Flächenträgheitsmoment und sind deshalb besonders verwindungssteif, was im Crashfall Vorteile bietet. Darüber hinaus wird durch die beschriebene Ausbildung des ersten und des zweiten Rahmens eine besonders kompakte und platzsparende Bauweise erreicht.

Weitere wichtige Merkmale und Vorteile der Erfindung ergeben sich aus den Unteransprüchen, aus den Zeichnungen und aus den zugehörigen Figurenbeschreibungen anhand der Zeichnungen. Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Die Figuren zeigen schematisch:
- Fig. 1: einen Querschnitt durch einen Endabschnitt eines Kraftfahrzeugs mit einer erfindungsgemäßen Rahmenanordnung,
- Fig. 2: eine Rahmenanordnung in geöffnetem Zustand,
- Fig. 3: eine Darstellung wie in Fig. 2, jedoch in geschlossenem Zustand,
- Fig. 4-7: jeweils eine Draufsicht auf die Erfindung mit jeweils unterschiedlichen Blattfedern,
- Fig. 8: eine perspektivische Ansicht auf einen Ausschnitt des ersten Rahmens als U-Profil,
- Fig. 9: eine Darstellung wie in Fig. 8, jedoch bei aufgenommenem zweiten Rahmen, d.h. in geschlossenem Zustand.

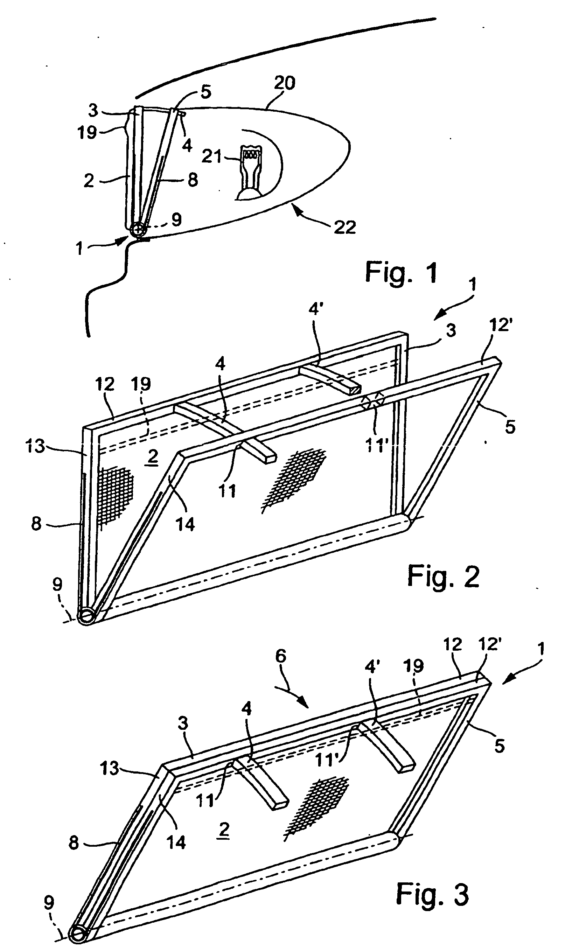

Gemäß Fig. 1 ist eine erfindungsgemäße Beleuchtungseinrichtung 22, welche ein fahrzeugfestes Gehäuseteil 20, eine darin integrierte Leuchteinheit 21 sowie eine Rahmenanordnung 1 aufweist, in einen Endabschnitt eines im Übrigen nicht dargestellten Kraftfahrzeugs integriert. Die Rahmenanordnung 1 bildet einen äußeren Abschluss der Beleuchtungseinrichtung 22 und weist einen ersten Rahmen 3 und einen zweiten Rahmen 5 auf. An dem ersten Rahmen 3 ist eine Scheibe 2, mit einer zur Stoßaufnahme und/oder -einleitung ausgebildeten Kontur 19, befestigt.

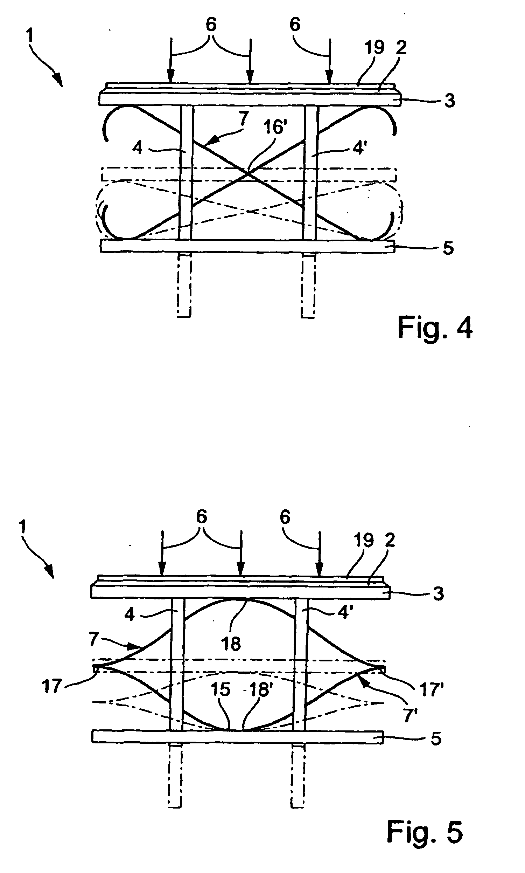

Der erste Rahmen 3 und der zweite Rahmen 5 sind gemäß Fig. 1 bis 3 um eine Schwenkachse 9 schwenkverstellbar aneinander gelagert, wobei der zweite Rahmen 5 an dem fahrzeugfesten Gehäuseteil 20 der Beleuchtungseinrichtung 22 befestigt ist. Der erste Rahmen 3 und der zweite Rahmen 5 sind an jeweils einer Rahmenseite um die sich durch diese Rahmenseiten erstreckende Schwenkachse 9 schwenkbar miteinander verbunden. Im eingebauten Zustand ist gemäß den eben gemachten Ausführungen daher eine Schwenkbewegung des ersten Rahmens 3 von einer Öffnungsstellung gemäß Fig. 1 und 2 in Richtung des zweiten Rahmens 5, bis zu einer schließenden Endstellung gemäß Fig. 3 möglich.

An einer zur Schwenkachse 9 parallel und davon beanstandet gelegenen ersten Rahmenseite 12 des ersten Rahmens 3 ist zumindest ein sich in Schwenkrichtung erstreckendes Führungselement 4 angeordnet. Prinzipiell ist auch eine Anordnung von mehreren Führungselementen 4, 4', wie in Fig. 2 dargestellt, möglich. Der zweite Rahmen 5 besitzt für jedes am ersten Rahmen 3 angeordnete Führungselement 4 eine zugehörige Führungsöffnung 11, durch welche das jeweilige Führungselement 4 bzw. 4' während der Schwenkbewegung geführt wird. Die Führungselemente 4, 4' bewirken dadurch während des Schwenkvorgangs eine passgenaue Zuführung des ersten Rahmens 3 zum zweiten Rahmen 5.

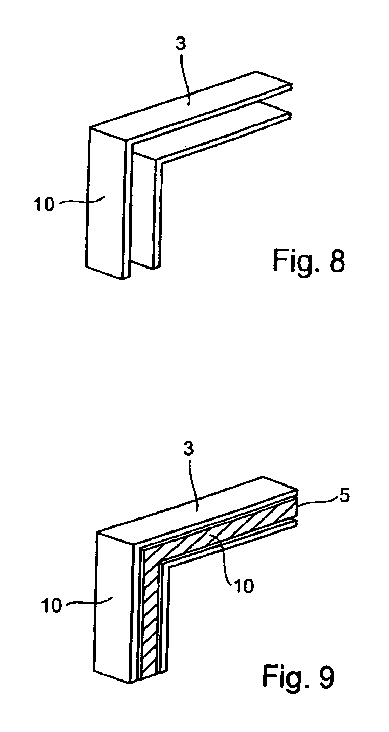

An einer quer zur Schwenkachse 9 verlaufenden zweiten Rahmenseite 13 und dritten Rahmenseite 14 der beiden Rahmen 3, 5 ist jeweils ein Schenkel einer Schenkelfeder 8 angeordnet, welche die beiden Rahmen 3, 5 in Richtung eines öffnenden Endanschlags spannt. Der erste und der zweite Rahmen 3, 5 sind gemäß Fig. 2 bei geschlossener Stellung (vgl. Fig. 3) in einer parallelen Lage. Denkbar ist jedoch aber auch eine Ausbildung der beiden Rahmen 3, 5 als U-Profil (vgl. Fig. 8 und Fig. 9) sowie eine unterschiedliche Querschnittsgröße der beiden Rahmen 3, 5 und damit die Aufnahme des zweiten Rahmens 5 vom ersten Rahmen 3 in zusammengeklapptem Zustand.

Gemäß Fig. 3 befinden sich die beiden Rahmen 3, 5 in der geschlossenen Stellung der Rahmenanordnung 1 in paralleler Lage und die Führungselemente 4 bzw. 4' sind bis zu einem Endanschlag durch die jeweils zugehörige Führungsöffnung 11 bzw. 11' am zweiten Rahmen 5 hindurch geführt.

Im Gegensatz zu Fig. 2, welche die erfindungsgemäße Rahmenanordnung 1 in einer normalerweise vorliegenden Ausgangslage darstellt, zeigt Fig. 3 die Lage des ersten Rahmens 3 bzw. der Scheibe 2 unter einer von außen einwirkenden Kraft 6. Die Kraft 6 kann dabei von einer mit dem Kraftfahrzeug kollidierenden Person ausgeübt werden.

Bei einem Unfall des Kraftfahrzeugs mit einem Fußgänger wird der erste Rahmen 3 samt integrierter Scheibe 2 in Richtung der einwirkenden Kraft 6 auf den zweiten Rahmen 5 zu bewegt, welcher seinerseits mit dem fahrzeugfesten Gehäuseteil 20 verbunden ist. Durch die Ausweichbewegung des ersten Rahmens 3 wird zusätzlicher Deformationsweg geschaffen, wodurch sich Verletzungen des Fußgängers vermindern lassen. Insbesondere kann durch das Ausweichen der Scheibe 2 die Gefahr des Zersplitterns derselben verringerter werden, wodurch sich u.U. gefährliche Schnittverletzungen des Fußgängers vermeiden lassen.

Nach dem Crashfall bewirkt die Schenkelfeder 8 ein Zurückverfahren des ersten Rahmens 3 und damit der Scheibe 2 in die Ausgangslage. Zusätzlich zur Schwenkfeder 8 oder alternativ dazu können weitere Federelemente 7, welche vorzugsweise als Blattfeder 15 ausgebildet sind, zwischen dem ersten Rahmen 3 und dem zweiten Rahmen 5 angeordnet sein (vgl. Fig. 4 bis Fig. 7).

Gemäß Fig. 4 bis Fig. 7 ist zwischen den beiden zur Schwenkachse 9 parallel und davon beabstandet gelegenen Rahmenseiten 12 bzw. 12' zumindest ein Federelement 7 angeordnet, welches als Blattfeder 15 ausgebildet ist.
Die gestrichelten Linien kennzeichnen dabei immer einen teilweise zusammengedrückten Zustand (Crash-Zustand) der Rahmenanordnung 1, wohingegen durchgezogene Linien den öffnenden Zustand bei einem Endanschlag (Normallage) darstellen.

In Fig. 4 sind zwei S-förmige Federelemente 7, 7' dargestellt, welche in sich kreuzender Weise und spiegelbildlich zu einer vertikal zur Zeichenebene und parallel zur Kraftrichtung 6 befindlichen Spiegelebene zwischen dem ersten Rahmen 3 und dem zweiten Rahmen 5 angeordnet sind. Die beiden Federelemente 7, 7' kreuzen sich in einem Kreuzungspunkt 16 und sind in diesem miteinander verbunden. Am ersten Rahmen 3 bzw. am zweiten Rahmen 5 sind die Federelemente 7 bzw. 7' quer zur Kraftrichtung 6 verschieblich gelagert. Bei einer äußeren Krafteinwirkung in Richtung 6 werden die Federelemente 7, 7' zu einer 8-förmigen Gestalt zusammengedrückt.

Gemäß Fig. 5 ist eine im wesentlichen zitronenförmige Anordnung zweier Federelemente 7, 7' dargestellt, wobei die beiden Federelemente 7, 7' jeweils an einem Fixierpunkt 18 bzw. 18' am ersten Rahmen 3 bzw..am zweiten Rahmen 5 fest angeordnet sind. An Verbindungspunkten 17 bzw. 17' sind die beiden Federelemente 7, 7' miteinander verbunden. Bei einer einwirkenden Kraft 6 erfolgt ein Zusammendrücken der zitronenförmigen Gestalt der beiden Federelemente 7, 7' sowie eine damit einhergehende Verlängerung quer zur Kraftrichtung 6.

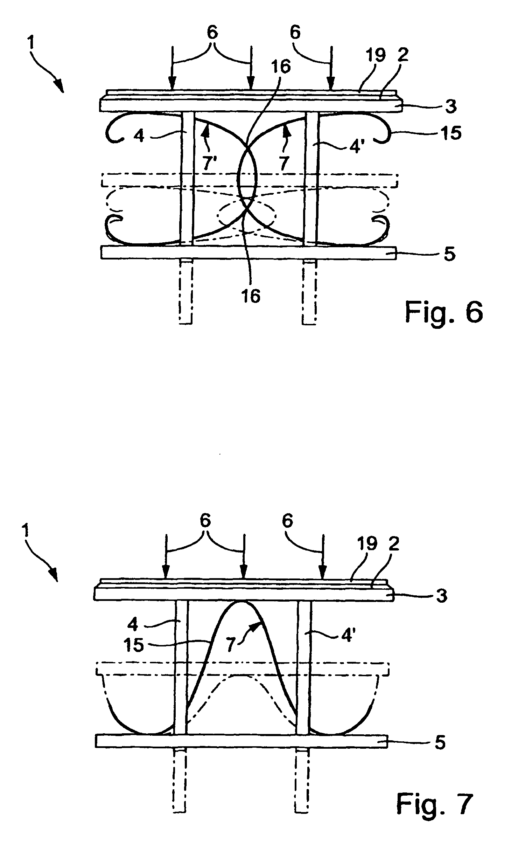

Fig. 6 zeigt eine alternative Ausführungsform der erfindungsgemäßen Lösung mit zwei Federelementen 7 bzw. 7', welche sich in zwei Kreuzungspunkten 16 kreuzen und in diesen miteinander verbunden sein können. Die Funktionsweise der beiden Federelemente 7, 7' ist dabei ähnlich der oben beschriebenen.

Im Gegensatz zu den Fig. 4 bis 6 zeigt Fig. 7 eine Anordnungen eines einzelnen Federelementes 7, welches sinuswellenähnlich zwischen den beiden Rahmen 3, 5 angeordnet ist. Die Federwirkung tritt hierbei durch Flachdrücken der Wellenberge bzw. -täler (Amplituden der Sinuswelle) auf.

Fig. 8 und Fig. 9 zeigen eine alternative Ausführungsform eines als U-Profil 10 ausgebildeten Rahmenabschnitts. Die U-Profile 10 sind dabei am jeweiligen Rahmen 3, 5 so angeordnet, dass eine offene Seite des U-Profils 10 am ersten Rahmen 3 der offenen Seite des U-Profils 10 am zweiten Rahmen 5 gegenüberliegt. Dies bietet den Vorteil, dass die Federelemente 7, 7' in einen Hohlraum des U-Profils 10 integriert werden können.

Gemäß Fig. 9 sind die jeweiligen U-Profile 10 des ersten Rahmens 3 und des zweiten Rahmens 5 so ausgestaltet, dass ein Außenmaß des zweiten Rahmens 5 mit einem Innenmaß des ersten Rahmens 3 korrespondiert und dass in zusammengeklapptem Zustand der erste Rahmen 3 den zweiten Rahmen 5 aufnimmt. Die beiden Rahmen 3, 5 umschließen dabei den in Fig. 8 einseitig offen dargestellten Hohlraum, welcher von dem U-Profil 10 des ersten Rahmens 3 an drei Seiten begrenzt wird. In zusammengeklapptem Zustand wird der zweite Rahmen 5 vollständig vom ersten Rahmen 3 aufgenommen und bildet mit diesem ein im wesentlichen rechteckiges Profil, wodurch eine sehr kompakte Bauweise erreicht wird.

Zusammenfassend lassen sich die wesentlichen Merkmale der erfindungsgemäßen Lösung wie folgt charakterisieren:

Die Rahmenanordnung 1 weist einen ersten Rahmen 3 und einen zweiten Rahmen 5 auf, wobei am ersten Rahmen 3 die Scheibe 2 befestigt ist.
Die beiden Rahmen 3, 5 sind um die Schwenkachse 9 schwenkverstellbar gelagert, wobei der zweite Rahmen 5 an dem fahrzeugfesten Gehäuseteil 20 der Beleuchtungseinrichtung 22 befestigt ist.

An der zur Schwenkachse 9 parallel und davon beanstandet gelegenen ersten Rahmenseite 12 ist das sich in Schwenkrichtung erstreckende Führungselement 4 bzw. 4' angeordnet, dem eine zugehörige Führungsöffnung 11 bzw. 11', durch welche das Führungselement 4 bzw. 4' während der Schwenkbewegung geführt wird, zugeordnet ist.

An der quer zur Schwenkachse 9 verlaufenden zweiten Rahmenseite 13 und dritten Rahmenseite 14 ist zumindest jeweils ein Schenkel der Schenkelfeder 8 angeordnet, welche die beiden Rahmen 3, 5 in Richtung eines öffnenden Endanschlags spannt.

Bei einem Unfall des Kraftfahrzeugs mit einem Fußgänger wird der erste Rahmen 3 samt integrierter Scheibe 2 in Richtung der einwirkenden Kraft 6 auf den zweiten Rahmen 5 zu bewegt, wodurch zusätzlicher Deformationsweg geschaffen wird und sich Verletzungen des Fußgängers vermindern lassen. Nach dem Crashfall bewirkt die Schenkelfeder 8 ein Zurückverfahren des ersten Rahmens 3 in die Ausgangslage.

Zusätzlich zur Schenkelfeder 8 oder alternativ dazu können weitere Federelemente 7, welche vorzugsweise als Blattfeder 15 ausgebildet sind, zwischen dem ersten Rahmen 3 und dem zweiten Rahmen 5 angeordnet sein, wovon beispielhaft einige dargestellt sind (vgl. Fig. 4 bis Fig. 7).

Fig. 8 und Fig. 9 zeigen eine alternative Ausführungsform eines als U-Profil 10 ausgebildeten Rahmenabschnitts. Dabei sind die jeweiligen U-Profile 10 des ersten Rahmens 3 und des zweiten Rahmens 5 so ausgestaltet, dass in zusammengeklapptem Zustand der erste Rahmen 3 den zweiten Rahmen 5 aufnimmt, wodurch eine sehr kompakte Bauweise erreicht wird.

## Patentansprüche

1. Beleuchtungseinrichtung (22) für ein Kraftfahrzeug, mit einer Scheibe (2), die unter einer in Fahrzeuglängsrichtung einwirkenden Kraft (6) um eine quer und horizontal zur Fahrzeuglängsrichtung verlaufende Schwenkachse (9) verschwenkbar ist,
**dadurch gekennzeichnet,**
- **dass** die Scheibe (2) an einem ersten Rahmen (3) befestigt ist,
- **dass** der erste Rahmen (3) an einem zweiten Rahmen (5) um die Schwenkachse (9) schwenkverstellbar gelagert ist und
- **dass** der zweite Rahmen (5) an einem fahrzeugfesten Gehäuseteil (20) der Beleuchtungseinrichtung (22) befestigt ist.

2. Beleuchtungseinrichtung nach Anspruch 1,
**dadurch gekennzeichnet,**
**dass** der erste und der zweite Rahmen (3,5) an jeweils einer Rahmenseite um die sich durch diese Rahmenseiten erstreckende Schwenkachse (9) schwenkbar miteinander verbunden sind.

3. Beleuchtungseinrichtung nach Anspruch 1 oder 2,
**dadurch gekennzeichnet,**
**dass** der erste und der zweite Rahmen (3,5) an zur Schwenkachse (9) parallel und davon beabstandet gelegenen Rahmenseiten (12) über zumindest ein sich in Schwenkrichtung erstreckendes Führungselement (4) aneinander geführt sind.

4. Beleuchtungseinrichtung nach einem der Ansprüche 1 bis 3,
**dadurch gekennzeichnet,**
**dass** zwischen den beiden Rahmen (3,5) zumindest ein Federelement (7) angeordnet ist.

5. Beleuchtungseinrichtung nach Anspruch 3,
**dadurch gekennzeichnet,**
**dass** zwischen den beiden zur Schwenkachse (9) parallel und davon beabstandet gelegenen Rahmenseiten zumindest ein Federelement (7) angeordnet ist.

6. Beleuchtungseinrichtung nach Anspruch 4 oder 5,
**dadurch gekennzeichnet,**
**dass** das Federelement (7) als Blattfeder (15) ausgebildet ist.

7. Beleuchtungseinrichtung nach einem der Ansprüche 1 bis 6,
**dadurch gekennzeichnet,**
**dass** der erste und der zweite Rahmen (3,5) über eine Schenkelfeder (8) verbunden und bis zu einem öffnenden Endanschlag spannbar sind.

8. Beleuchtungseinrichtung nach einem der Ansprüche 1 bis 7,
**dadurch gekennzeichnet,**
**dass** an der Scheibe (2) eine vorstehende Kontur (19) zur Stoßaufnahme und/oder -einleitung angeordnet ist.

9. Beleuchtungseinrichtung nach einem der Ansprüche 1 bis 8,
**dadurch gekennzeichnet,**
- **dass** der erste und der zweite Rahmen (3,5) jeweils aus U-Profilen (10) ausgebildet sind,
- wobei die U-Profile (10) am jeweiligen Rahmen (3,5) so angeordnet sind, dass eine offene Seite des U-Profils (10) an dem einen Rahmen (3) zum anderen Rahmen (5) hin offen ist.

10. Beleuchtungseinrichtung nach einem der Ansprüche 1 bis 9,
**dadurch gekennzeichnet,**
- **dass** ein Außenmaß des einen Rahmens (5) mit einem Innenmaß des anderen Rahmens (3) korrespondiert und
- **dass** in zusammengeklapptem Zustand der eine Rahmen (3) den anderen Rahmen (5) aufnimmt.

## Claims

1. Light fitting (22) for a motor vehicle, with a lens (2) that can swivel about a swivel axis (9) extending horizontally and transversely to the longitudinal direction of the vehicle under the action of force (6) exerted in the said longitudinal direction,
**characterised in that**
- the lens (2) is fixed in a first frame (3),
- the first frame (3) is fitted so that is can swivel about a swivel axis (9) towards a second frame (5), and
- the second frame (5) is attached to a housing (20) of the light fitting which is fixed on the vehicle.

2. Light fitting according to Claim 1,
**characterised in that**
the first and second frames (3, 5) are connected to one another so as to swivel on a respective side of each frame through which the swivel axis (9) extends.

3. Light fitting according to Claims 1 or 2,
**characterised in that**
the first and second frames (3, 5) are guided relative to one another by at least one guiding element (4) positioned on a frame side (12) that lies parallel to and a distance away from the swivel axis (9).

4. Light fitting according to Claim 3,
**characterised in that**
at least one spring element (7) is arranged between the two frames (3, 5).

5. Light fitting according to Claim 3,
**characterised in that**
at least one spring element (7) is arranged between the two frame sides that lie parallel to and a distance away from the swivel axis (9).

6. Light fitting according to Claim 4 or 5,
**characterised in that**
the spring element (7) is made as a leaf spring (15).

7. Light fitting according to any of Claims 1 to 6,
**characterised in that**
the first and second frames (3, 5) are connected by a lever spring (8) and can be pushed apart to an open end stop.

8. Light fitting according to any of Claims 1 to 7,
**characterised in that**
a projecting contour (19) is formed on the lens (2) to absorb and/or transfer impact.

9. Light fitting according to any of Claims 1 to 8,
**characterised in that**
- the first and second frames (3, 5) are each made from U-sections (10),
- and the U-sections (10) of the respective frames (3, 5) are arranged with an open side of the U-section (10) of one frame (3) open towards the other frame (5).

10. Light fitting according to any of Claims 1 to 9,
**characterised in that**
- an outer dimension of one frame (5) corresponds to an inner dimension of the other frame (3), and
- when the frames are folded together, one frame (3) accommodates the other frame (5).

## Revendications

1. Dispositif d'éclairage (22) pour un véhicule automobile, avec un verre diffuseur (2) pivotant sous une force (6) agissant dans le sens longitudinal du véhicule, autour d'un axe de pivotement (9) s'étendant transversalement et horizontalement par rapport au sens longitudinal du véhicule,
**caractérisé en ce que**
- le verre diffuseur (2) est fixé à un premier cadre (3),
- le premier cadre (3) est articulé dans un deuxième cadre (5) autour de l'axe de pivotement (9) et réglable, et que
- le deuxième cadre (5) est fixé à un boîtier (20) solidaire au véhicule du dispositif d'éclairage (22).

2. Dispositif d'éclairage selon la revendication 1, **caractérisé en ce que** le premier et le deuxième cadre (3,5) sont reliés entre eux au niveau d'un même côté des cadres et ce, de façon pivotante autour de l'axe de pivotement (9) passant par ces côtés.

3. Dispositif d'éclairage selon la revendication 1 ou 2, **caractérisé en ce que** le premier et le deuxième cadre (3,5) sont guidés l'un par rapport à l'autre au moyen d'au moins un élément de guidage (4) s'étendant dans le sens de pivotement, au niveau des côtés (12) des cadres situés parallèlement à l'axe de pivotement (9) et disposé à distance dudit axe de pivotement.

4. Dispositif d'éclairage selon l'une quelconque des revendication 1 à 3, **caractérisé en ce qu'**un élément ressort (7) au moins est disposé entre les deux cadres (3,5).

5. Dispositif d'éclairage selon la revendication 3, **caractérisé en ce qu'**un élément ressort (7) au moins est disposé entre les deux côtés des cadres situés de façon parallèle à l'axe de pivotement (9) et à distance.

6. Dispositif d'éclairage selon la revendication 4 ou 5 **caractérisé en ce que** l'élément ressort (7) a la forme d'un ressort à lame (15).

7. Dispositif d'éclairage selon l'une quelconque des revendications 1 à 6, **caractérisé en ce que** le premier et le deuxième cadre (3,5) sont reliés entre eux par un ressort à branches (8) et qu'ils peuvent être mis sous tension jusqu'à une butée d'extrémité ouvrante.

8. Dispositif d'éclairage selon l'une quelconque des revendications 1 à 7, **caractérisé en ce qu'**un contour (19) faisant saillie est disposé au niveau du verre diffuseur (2), pour la prisé ou l'introduction des coups.

9. Dispositif d'éclairage selon l'une quelconque des revendications 1 à 8, **caractérisé en ce que**
- le premier et le deuxième cadre (3,5) sont exécutés chacun en profilés en U (10),
- les profilés en U (10) sont ouverts au niveau du cadre respectif (3,5) de telle sorte qu'un côté ouvert du profilé en U (10) du cadre (3) s'ouvre par rapport à l'autre cadre (5).

10. Dispositif d'éclairage selon l'une quelconque des revendications 1 à 9, **caractérisé en ce que**
- une cote extérieure du cadre (5) correspond à une cote intérieure de l'autre cadre (3), et que
- à l'état replié, le cadre (3) contient l'autre cadre (5).
